# EUROPEAN PATENT APPLICATION

(11) **EP 1 744 566 A1**
(43) Date of publication of application: **17.01.2007**
(21) Application number: 05300574.0
(22) Date of filing: 12.07.2005
(51) Int. Cl.: H04Q 3/00

(54) **A method and a signalling gateway for distributing data amongst a plurality of application server processes**

(71) Applicant: Hewlett-Packard Development Company, L.P., Houston, TX 77070 (US)
(72) Inventor: Cimino, Jean-Christophe, Hewlett-Packard France, 06901 Sophia-Antipolis (FR); Rigault, Anne, Hewlett-Packard France, 06901 Sophia-Antipolis (FR); Cavalier, Laurent, Hewlett-Packard France, 06901 Sophia-Antipolis (FR)
(74) Representative: Franks, Adam Peter

(57) **Abstract**

According to one aspect of the present invention, there is provided a method, in a signaling gateway, of distributing the processing of incoming data amongst a plurality of application server processes (ASP), the distribution of the data being performed in accordance with a weighting parameter associated with each ASP,the method comprising: defining a group of one or more active ASPs to which data is distributed amongst and a group of one or more backup ASPs to which no data is distributed; and determining when to use the backup ASPs in place of the active ASPs, and thereafter distributing data amongst the backup ASPs in accordance with their associated weighting parameters.

## Description

The present invention relates generally to methods and apparatus for processing data, such as messages, in a signaling gateway.

Establishing connections between two telephones involves a complex interaction of digital messages, hereinafter referred to generally as signaling. Nowadays telephone systems perform what is known as "out-of-band" signaling. Out-of-band signaling means that the communications required between the switches and other equipment in the network take place on communication channels other than the channel by which the voice or data flows. Typically, the out-of-band signaling takes place by means of digital communication channels. Thus, the public switched telephone network (PSTN) generally uses two types of channels, media and signaling.

Several protocols have been defined for out-of-band signaling. The most commonly used protocol, in North America, Asia and Europe at least, is known as Signaling System No. 7 (SS7). However, the SS7 protocol defines more than just a protocol for communication between switches. It also defines an entire switching network for facilitating signaling for call establishment, routing, and information exchange functions of switched circuit networks.

Since the amount of data transferred over data networks is now much larger than the voice traffic that is carried over the PSTN, carriers are in the process of consolidating both types of networks. In addition, telecommunication networks are increasingly making use of standard computing hardware in order to reduce IT costs.

Therefore, there is a trend in the telephone industry to migrate telephone systems using SS7-based networks for signaling to Internet Protocol (IP) networks. The Internet protocols are standardised by the Internet Engineering Task Force (IETF). Moving either or both of the media and signaling channels to an IP infrastructure involves the use of very different technologies and can be done independently. The SIGTRAN IETF working group is currently in the process of defining the protocols for back-hauling SS7 signaling messages across IP networks. Generally speaking, signaling across an IP network involves replacing the lower levels of the SS7 layered protocol communications and transport layers with IP network protocol communications and transport layers.

The SIGTRAN group has taken the initiative to define open standards for transporting SS7 over IP networks. With SIGTRAN technology telephone services which today lie on top of SS7 networks can run Application Servers (AS) lying on top of IP networks. The interworking with SS7 networks is performed by SIGTRAN signaling gateways (SG).

Data, such as signaling messages, received by a signaling gateway from an SS7 network are distributed by the signaling gateway to an appropriate application server. The ways in which a signaling gateway may determine to which application server a message should be distributed are well known.

For increased performance and reliability it is common to use multiple application server processes (ASP) to serve a single application server. SIGTRAN defines three different traffic routing modes which define how messages are routed. The three modes are: override; load-share; and broadcast.

In override traffic mode, one or more ASPs may be defined as active ASPs. In this mode the signaling gateway is arranged to send data intended for a given application server to only a single ASP. Typically the signaling gateway is arranged to send data to, typically, the last ASP to be registered or declared to the signaling gateway. All other registered ASPs receive no data and act as backup ASPs. Should the last declared ASP no longer be available, the signaling gateway switches the distribution of data to one of the other declared ASPs.

In load-share traffic mode, the signaling gateway is arranged to distribute data intended for a given application server equally amongst a group of ASPs serving that application server.

In broadcast traffic mode, the signaling gateway is arranged to send all data intended for a given application server in parallel to all ASPs serving that application server.

One of the problems of the current situation is that, whilst the override traffic mode does enable the provision of one or more backup ASPs, it does not enable load-sharing between multiple ASPs, since in this mode only one ASP receives data at any one time. On the other hand, the load-share traffic mode enables load-sharing between multiple ASPs, but does not provide for backup ASPs.

The current situation is, therefore, somewhat unsatisfactory.

Accordingly, one aim of the present invention is to enable the use of load-sharing between multiple ASPs, and at the same provide one or more backup ASPs. It is further desirable to achieve this aim without detracting from the SIGTRAN specification.

According to a first aspect of the present invention, there is provided a method, in a signaling gateway, of distributing the processing of incoming data amongst a plurality of application server processes (ASP), the distribution of the data being performed in accordance with a weighting parameter associated with each ASP. The method comprises defining a group of one or more active ASPs to which data is distributed amongst and a group of one or more backup ASPs to which no data is distributed, and determining when to use the backup ASPs in place of the active ASPs, and thereafter distributing data amongst the backup ASPs in accordance with their associated weighting parameters.

Advantageously, this provides a combined load-share and backup traffic mode which enables both load-sharing amongst active ASPs and provisioning of backup ASPs.

Preferably, the step of defining further comprises defining the groups of active and backup ASPs by way of the weighting parameter.

Suitably, the step of determining when to use the backup ASPs in place of the active ASPs further comprises determining when none of the active ASPs are available.

Suitably, the step of determining when to use the backup ASPs in place of the active ASPs further comprises determining when a manual switchover command is received.

Preferably, the step of defining further comprises defining active ASPs by way of the weighting parameter having a value between two predetermined limits, and defining backup ASPs by way of a weighting parameter having a value between two different predetermined limits.

Preferably, the step of defining comprises defining active ASPs by way of a positive weighting parameter, and defining backup ASPs by way of a negative weighting parameter.

Suitably, the step of distributing data to the backup ASPs distributes data to the backup ASPs according to their inverted associated weighting parameters.

Suitably, the step of distributing data comprises distributing data received from a signaling system 7 SS7 network.

Suitably, the signaling gateway is a SIGTRAN compliant signaling gateway.

According to a second aspect of the present invention, there is provided signaling gateway for distributing the processing of incoming data amongst a plurality of application server processes (ASP), the distribution of the data being performed in accordance with a weighting parameter associated with each ASP. The signaling gateway is arranged to define a group of one or more active ASPs and a group of one or more backup ASPs and further comprises a data distribution module for distributing the incoming data amongst the group of active ASPs in accordance with their respective weighting parameters, and processing logic for determining when to use the backup ASPs in place of the active ASPs, and when it is so determined the data distribution module being arranged to distribute data amongst the backup ASPs in accordance with their associated weighting parameters.

Preferably, the signaling gateway is arranged to define the groups of active and backup ASPs by way of the weighting parameter.

Suitably, the processing logic is arranged to determine when none of the active ASPs are available.

Suitably, the processing logic is arranged to determine when a manual switchover command is received.

Preferably, the signaling gateway is arranged to define active ASPs by way of the weighting parameter having a value between two predetermined limits, and to define backup ASPs by way of a weighting parameter having a value between two different predetermined limits.

Preferably, the signaling gateway is arranged to define active ASPs by way of a positive weighting parameter, and backup ASPs by way of a negative weighting parameter.

Suitably, the data distribution module is arranged to distribute data amongst the backup ASPs according to their inverted associated weighting parameters.

Suitably, the signaling gateway is arranged to distribute data received from a signaling system 7 SS7 network.

Suitably, the signaling gateway is a SIGTRAN compliant signaling gateway.

Embodiments of the present invention will now be described, by way of nonlimiting example only, with reference to the accompanying diagrams, in which:
Figure 1 is a block diagram showing an overview of a telecommunication system incorporating a signaling gateway according to the prior art;
Figure 2 is a block diagram showing an overview of a telecommunication system incorporating a signaling gateway according to the prior art;
Figure 3 is a block diagram showing an overview of a telecommunication system according to an embodiment of the present invention; and
Figure 4 is a flow diagram outlining example processing steps taken by the signaling gateway of Figure 3 according to an embodiment of the present invention.

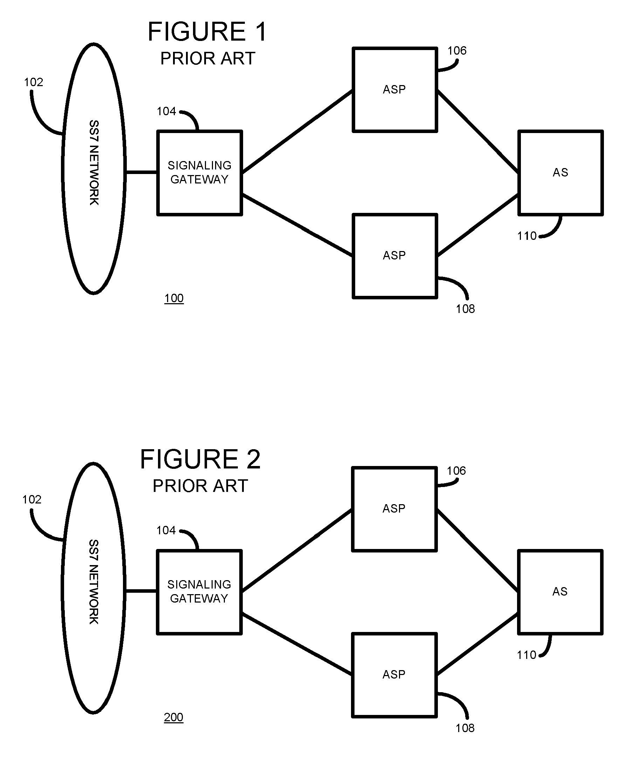

Referring now to Figure 1, there is shown a block diagram showing an overview of a telecommunication system 100 incorporating a signaling gateway 104 according to the prior art. Data, such as signaling messages, received from an SS7 network 102 is distributed by the signaling gateway 104 to an application server 110. In the present example, SIGTRAN load-share traffic mode is used to distribute data received at the signaling gateway intended for the application server 110 equally between ASPs 106 and 108.

Although the Sigtran load-share traffic mode enables basic load sharing between multiple ASPs, it does not enable the definition of backup ASPs in the case that one or more of the ASPs fails.

Referring now to Figure 2, there is shown a block diagram showing an overview of a telecommunication system 200 incorporating a signaling gateway 104 according to the prior art. Data, such as signaling messages, received from an SS7 network 102 are distributed by the signaling gateway 104 to an application server 110. In the present example, ASPs 106 and 108 are configured in over-ride traffic mode. In this traffic mode, the signaling gateway 104 sends data received from the SS7 network 102 to a single ASP, for example ASP 108, known as the master ASP. The signaling gateway 104, also configured in over-ride traffic mode, typically defines the master ASP as being the last ASP declared or registered to the signaling gateway 104.

If, however, the signaling gateway 104 detects that the ASP 108 is no longer available the signaling gateway 104 is arranged to send all data to be distributed to the application server 110 via the ASP 106. An ASP may become no longer available due to a failure of the ASP itself or of a communication link connection failure between the ASP and the signaling gateway, or alternatively may be made unavailable to enable maintenance to be performed thereon. Where multiple ASPs are defined in over-ride traffic mode, the signaling gateway 104 is able to continue distributing data to the application server 110 providing there is at least one active ASP functioning.

However, although use of Sigtran over-ride traffic mode enables active and backup ASPs to be defined, it does not enable load-sharing between multiple ASPs to be used in an active/standby configuration.

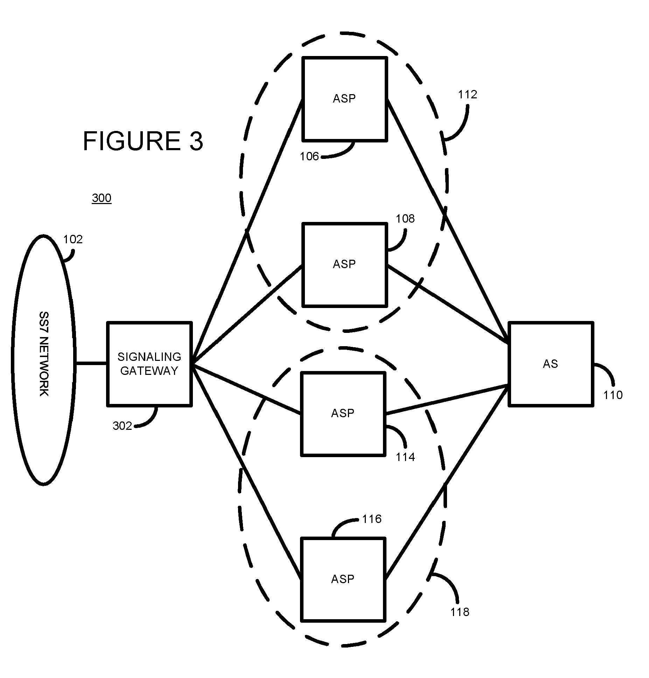

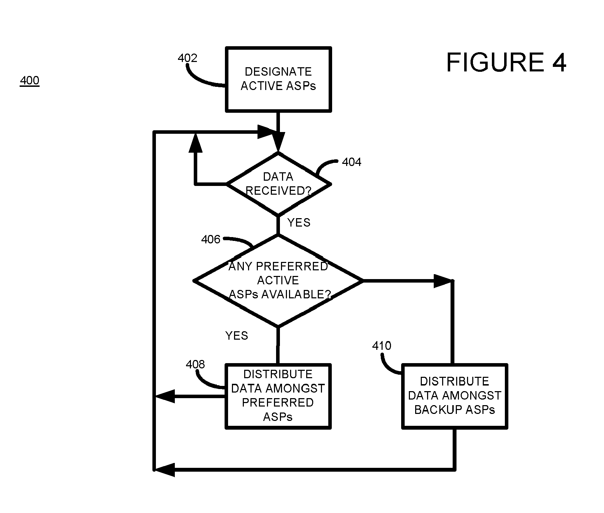

Figure 3 is a block diagram showing an overview of a telecommunication system 300 according to an embodiment of the present invention. Further details of the operation of the system 300 is made with additional reference to Figure 4, which is a flow diagram outline example processing steps which are taken by the signaling gateway 302.

According to the present embodiment each ASP is assigned, within the signaling gateway 302, a load-share weighting which defines the proportion of data which is to be distributed from the signaling gateway to each ASP serving a given application server. For example, ASP 106 may be configured to have a weighting of 1, whereas ASP 108 may be configured to have a weighting of 3, which causes the signaling gateway 302 to distribute three times as much data to ASP 108 compared to ASP 106. Since the load-share weighting only exists within the signaling gateway 302 a signaling gateway according to the present embodiment advantageously remains, from an external point of view, fully compliant with the Sigtran specification.

Additionally, each ASP is designated (step 402) by the signaling gateway 302 as being either part of a group 112 of preferred active ASPs or part of a group 118 of backup ASPs. At step 404 data to be distributed to the application server 110 is received at the signaling gateway 302.

The signaling gateway 302 determines (step 406) whether at least one of the preferred active ASPs are available and, if so, distributes the data (step 408) amongst the available preferred active ASPs in accordance with their respective load-share weightings. During this time no data is distributed to backup ASPs. The distribution of the data may, for example, be handled by a data distribution module (not shown) of the signaling gateway 302.

If one of the preferred active ASPs becomes unavailable, distribution of data continues amongst the remaining preferred active ASPs. However, if the signaling gateway 302 determines (step 406) that none of the preferred active ASPs are available, the signaling gateway distributes (step 410) the data amongst the available backup ASPs, again in accordance with their respective load-share weightings. The determination may be achieved, for example, by suitable processing logic (not shown) within the signaling gateway 302.

If at any time the signaling gateway 302 determines (step 406) that at least one of the preferred active ASPs is available, the signaling gateway 302 stops distributing data amongst the backup ASPs, and continues distributing (step 408) data amongst the available preferred active ASPs.

The system 300 thus uses a new weighted traffic mode and defines a group of one or more preferred active ASPs, and, advantageously, at the same time enables one or more backup ASPs to be defined.

In a preferred embodiment the weighting parameter itself is used to designate both the load-share weight assigned to a particular ASP and, at the same time, is used to define whether the particular ASP is one of a group of preferred active ASPs or backup ASPs.

For example, in one embodiment a positive weighting is used to define an ASP as being a preferred active ASP, whereas a negative weighting is used to define an ASP as being a backup ASP. For example, referring to Figure 3 ASPs 114 and 116 may have a defined weighting of -1 and -3 respectively. Thus, those ASPs having a positive weighting form a group 112 of preferred active ASPs, whereas those ASPs having a negative weighting form a group 118 of backup ASPs.

When a negative weighting scheme is used to define a group of backup ASPs, when the backup ASPs are being used by the signaling gateway 302 for the distribution of data the signaling gateway 302 effectively ignores or inverts the sign of the weighting, and distributes the data in accordance with the respective weighting of each backup ASP. For example, when a backup ASP having a defined load-share weight of -3 is used, the signaling gateway distributes messages as if it had a weighting of 3. One advantage of this is that a single signed variable can be used to designate whether an ASP is designated as an active or backup ASP.

In a further embodiment, a group of preferred active ASPs is designated as those ASPs having a weighting between a predetermined limit, for example, between 1 and 127, and a group of backup ASPs designated as those ASPs having a weighting between 128 and 255. When the group of ASPs having a weighting between 1 and 127 are designated as the preferred active ASPs, messages received from the SS7 network 102 by the signaling gateway 302 are distributed amongst the preferred active ASPs according to their respective load-share weights. One advantage of this is that a single unsigned variable can be used to designate whether an ASP is designated as an active or backup ASP.

When the group of backup ASPs having a load-share weight between 128 and 255 are used, the signaling gateway 302 subtracts 127 from the weighting of ASP, and distributes messages in the normal manner.

The configuration of the weighting parameters is performed at initialization of the signaling gateway 104 and may take into account various factors, such as the processing power at a given ASP, available resources, and the like. It is also desirable that weighting parameters within the signaling gateway be modifiable after initialization to enable the distribution of data amongst different ASPs to be modified in real or in substantially real-time to take into account various factors such as data load, ASP availability, and the like.

According to the present embodiments, ASPs may also be assigned a zero weight. Such a zero weighting preferably prevents the signaling gateway 302 from distributing data to such ASPs. This is particularly useful to enable the an ASP to be temporarily removed from active use, for example to enable maintenance or upgrade of the ASP to be performed. The ASP may be later used as an active or backup ASP in the manner described herein.

In some circumstances it is useful for the overall weighting of the active and backup ASPs to be the same. For example, if the ASP 106 and ASP 108 have weightings of 1 and 3 respectively, it is preferable that the backup ASP 114 and ASP 116 have corresponding weighting of -1 and -3 respectively. In this way the network operator is assured that the same level of performance may be achieved either from the active or backup group of ASPs. However, those skilled in the art will appreciate that it is not necessary for the active and backup ASPs to have corresponding weightings, nor is it necessary for the total collective processing capability of the backup ASPs to be the same as that of the active ASPs.

In a yet further embodiment an additional parameter is used to define whether an ASP is an active or backup ASP, with the load-share weighting parameter being used just to indicate the proportion of data which is to be distributed thereto. The additional parameter may be defined by the signaling gateway.

One of the benefits of having a combined load-shared and backup traffic mode is, as described above, to provide a highly-available system which is resistant to failure of the preferred active ASPs. Such a system also enables a network operator to perform maintenance on an active group of ASPs, by manually causing the signaling gateway 302 to designate the current backup ASPs as the current active ASPs in response to a manual switchover command being received by the signaling gateway. In response to such a switchover command the signaling gateway may, for example, set the load-share weight of each of preferred active ASPs to zero, thereby causing the signaling gateway to use the backup ASPs to distribute data.

## Claims

1. A method, in a signaling gateway, of distributing the processing of incoming data amongst a plurality of application server processes (ASP), the distribution of the data being performed in accordance with a weighting parameter associated with each ASP, the method comprising:
defining a group of one or more active ASPs to which data is distributed amongst and a group of one or more backup ASPs to which no data is distributed; and
determining when to use the backup ASPs in place of the active ASPs, and
thereafter distributing data amongst the backup ASPs in accordance with their associated weighting parameters.

2. The method of claim 1, wherein the step of defining further comprises defining the groups of active and backup ASPs by way of the weighting parameter.

3. The method of claim 1 or 2, wherein the step of determining when to use the backup ASPs in place of the active ASPs further comprises determining when none of the active ASPs are available.

4. The method of claim 1, 2 or 3, wherein the step of determining when to use the backup ASPs in place of the active ASPs further comprises determining when a manual switchover command is received.

5. The method of claim 1, 2, 3 or 4, wherein the step of defining further comprises defining active ASPs by way of the weighting parameter having a value between two predetermined limits, and defining backup ASPs by way of a weighting parameter having a value between two different predetermined limits.

6. The method of claim 5, the step of defining comprising defining active ASPs by way of a positive weighting parameter, and defining backup ASPs by way of a negative weighting parameter.

7. The method of claim 6, wherein the step of distributing data to the backup ASPs distributes data to the backup ASPs according to their inverted associated weighting parameters.

8. The method of any previous claim, wherein the step of distributing data comprises distributing data received from a signaling system 7 SS7 network.

9. The method of any previous claim, the signaling gateway being a SIGTRAN compliant signaling gateway.

10. A signaling gateway for distributing the processing of incoming data amongst a plurality of application server processes (ASP), the distribution of the data being performed in accordance with a weighting parameter associated with each ASP,
wherein the signaling gateway is arranged to define a group of one or more active ASPs and a group of one or more backup ASPs; the signaling gateway further comprising:
a data distribution module for distributing the incoming data amongst the group of active ASPs in accordance with their respective weighting parameters; and
processing logic for determining when to use the backup ASPs in place of the active ASPs, and when it is so determined the data distribution module being arranged to distribute data amongst the backup ASPs in accordance with their associated weighting parameters.

11. The signaling gateway of claim 10, wherein the signaling gateway is further arranged to define the groups of active and backup ASPs by way of the weighting parameter.

12. The signaling gateway of claims 10 or 11, wherein the processing logic for determining when to use the backup ASPs in place of the active ASPs is arranged to determine when none of the active ASPs are available.

13. The signaling gateway of claims 10, 11 or 12, wherein the processing logic for determining when to use the backup ASPs in place of the active ASPs is arranged to determine when a manual switchover command is received.

14. The signaling gateway of claims 10, 11, 12 or 13, wherein the signaling gateway is arranged to define active ASPs by way of the weighting parameter having a value between two predetermined limits, and to define backup ASPs by way of a weighting parameter having a value between two different predetermined limits.

15. The signaling gateway of any of claims 10 to 14, wherein the signaling gateway is arranged to define active ASPs by way of a positive weighting parameter, and backup ASPs by way of a negative weighting parameter.

16. The signaling gateway of claim 15, wherein the data distribution module is arranged to distribute data amongst the backup ASPs according to their inverted associated weighting parameters.

17. The signaling gateway of any of claims 10 to 16, wherein the signaling gateway is arranged to distribute data received from a signaling system 7 SS7 network.

18. The signaling gateway of any of claims 10 to 17, wherein the signaling gateway is a SIGTRAN compliant signaling gateway.
